# EUROPEAN PATENT SPECIFICATION

(11) **EP 2 390 964 B1**
(45) Date of publication and mention of the grant of the patent: **29.07.2015**
(21) Application number: 11003925.2
(22) Date of filing: 12.05.2011
(51) Int. Cl.: H01R 13/52, H01R 13/621

(54) **Connector and connector assembly**
Verbinder und Verbindereinheit
Connecteur et ensemble de connecteur

(30) Priority: 24.05.2010 JP 2010118650
(43) Date of publication of application: 30.11.2011
(73) Proprietor: Sumitomo Wiring Systems, Ltd., Yokkaichi-shi, Mie 510-8503 (JP)
(72) Inventor: Shibata, Takahiro, Yokkaichi-City Mie 510-8503 Japan (JP)
(74) Representative: Müller-Boré & Partner Patentanwälte PartG mbB

(56) References cited:
- DE-U1- 20 004 565
- JP-A- 2006 147 474
- US-A- 5 389 005
- US-A- 5 458 508
- US-A- 5 622 512

## Description

The present invention relates to a connector and to a connector assembly comprising it.

A conventional connector is disclosed in Japanese Unexamined Patent Publication No. 2006-147474. This connector includes a housing with a terminal accommodating portion and an outer tubular portion, and an annular seal member to be mounted on the terminal accommodating portion. A mating housing is fitted between the terminal accommodating portion and the outer tubular portion, and the seal member is formed with a flange which projects radially outwardly and resiliently sandwiched between the two housings in a connected state. Further, the outer tubular portion is formed with a catching piece projecting inwardly.

An end surface of the flange serves as a pressing surface and, in the process of mounting the seal member into the housing, the pressing surface is pressed to push the seal member to a mount position. At the mount position, the flange resiliently moves past the catching portion and is engaged with the catching portion, whereby the seal member is mounted and retained in the housing.

In the above case, the pressing surface of the seal member is arranged at a position overlapping the catching portion in a width direction of the catching portion, i.e. arranged side by side with the catching portion in the projecting direction of the catching portion when the seal member is mounted into the housing.

In the case of the above conventional connector, it is difficult to ensure a sufficient space between the terminal accommodating portion and the outer tubular portion in the projecting direction of the catching portion. In addition, since the catching portion and the pressing surface are arranged side by side in this narrow space, a sufficient pressing area of the pressing surface cannot be ensured by being taken up by the catching portion. On the other hand, if the space between the terminal accommodating portion and the outer tubular portion is enlarged, it leads to enlargement of the housing, which is not preferable.

US 5 458 508 A discloses a method and apparatus for connecting an electrical component to a housing, wherein terminals are formed on an electrically-conductive plate supporting a reed switch, and the terminals are extended through a resin holder. The holder is inserted into a connector housing and is fixedly secured within the housing by fusion.

US 5 389 005 A discloses a waterproof electric connector seal member including a rubber-formed seal element having a rectangular tubular section and plastic-formed tongues fixed to a flange portion of the seal element. The seal member is retained in an electric connector housing via the tongues. Thus, although the shape of the seal element varies depending upon the number of terminals accommodated within the electric connector, the standard-shaped tongues can be commonly used.

US 5 622 512 A discloses an apparatus for affixing a packing unit for a waterproof connector including a first connector housing for receiving wires and having through-holes, and a second connector housing for connecting with the first connector housing. A packing unit is inserted in the first connector housing for providing a waterproof seal at an engaging surface between the first connector housing and the second connector housing. Projection parts are disposed respectively on opposite side portions of one end of the packing unit each of the projection parts having an outwardly extending retaining portion for engaging the first connector housing. A rear holder is attached to a rear end of the first connector housing for retaining the packing unit, and lock portions are disposed respectively on opposite side portions of one end of the rear holder. Lock pawls, for respectively retaining the lock portions, are disposed adjacent to outlets of the through-holes formed in the first connector housing, respectively.

DE 200 04 565 U1 discloses a cable connector to be used in underground mining, wherein the conductor wires of the cable are connected to connector elements in a plastic housing, and wherein the cable is fixed and sealed at the cable insertion opening by a cable shell, a molded part formed at the housing and a sealing collar positioned in the housing. A sealing ring is disposed around the part of the housing containing the connector elements and the sealing ring is sandwiched by the outer surface of the housing and the sealing surface of a socket connector when the socket connector is mounted to the housing.

The present invention was developed in view of the above situation and an object thereof is to improve operability of a connector and a connector assembly.

This object is solved according to the invention by the features of the independent claims. Particular embodiments are subject of the dependent claims.

In order to accomplish the above object, the present invention according to claim 1 is directed to a connector, comprising a housing connectable to a mating housing; and a seal member mounted in the housing and configured to be held in close contact with the two housings in a connected state by being sandwiched between the two housings; wherein the housing is formed with at least one catching piece; an end surface of the seal member serves as a pressing surface; the pressing surface is pressed to push the seal member to a mount position in the process of mounting the seal member into the housing and the seal member resiliently moves past the catching piece and is engaged with the catching piece at the mount position; and the pressing surface of the seal member is arranged at a position at least partly overlapping the catching piece in a projecting direction of the catching piece when the seal member is mounted into the housing.

Thus, a sufficient pressing area of a pressing surface of a seal member is ensured without enlarging a housing, thereby improving operability of the connector. Moreover, since the pressing surface of the seal member is arranged at the position overlapping the catching piece in the projecting direction of the catching piece when the seal member is mounted into the housing, the pressing surface can be formed in a sufficient space in the projecting direction of the catching piece. As a result, a sufficient pressing area of the pressing surface of the seal member can be ensured without enlarging the housing.

According to a particular embodiment, a pair of pressing surfaces of the seal member are arranged at the substantially opposite sides of the catching piece when the seal member is mounted into the housing.

Since the pair of pressing surfaces of the seal member are arranged at the substantially opposite sides of the catching piece when the seal member is mounted into the housing, a jig used to press the pressing surfaces can have, for example, a channel or recessed shape, whereby strength of the jig can be increased.

Particularly, the seal member is formed with at least one projection projecting in the substantially same direction as the projecting direction of the catching piece from a part of the seal member adjacent to the pressing surface; and the projection is engaged with the catching piece.

Since the seal member is formed with the projection projecting in the substantially same direction as the projecting direction of the catching piece from the part of the seal member adjacent to the pressing surface and the projection is engaged with the catching piece, an area of engagement of the seal member with the catching piece can be adjusted according to a projecting amount of the projection.

Further particularly, the housing includes a housing main body, an outer tubular portion at least partly surrounding the housing main body while being spaced apart by a specified distance, and a coupling portion coupling the housing main body and the outer tubular portion.

Further particularly, the coupling portion is formed with at least one through hole at a position substantially corresponding to a flange portion of the seal member, and a receiving portion projecting backward from a position substantially corresponding to the through hole, wherein the flange portion can be passed through the through hole to be at least partly inserted into the receiving portion, so that at least part of the flange portion can be seen from the outside.

Further particularly, the seal member has a color different from the housing.

According to the invention, there is further provided a connector assembly comprising a connector according to the above invention or a particular embodiment thereof and a mating connector to be connected thereto.

According to a particular embodiment, the mating connector comprises a mating housing to be connected to the housing and having at least one recess formed in a connection surface at least partly substantially facing the housing in a connected state.

Further particularly, a nut at least partly inserted into the recess, fixed to the mating housing in a state exposed on the connection surface, and threadably engaged with a bolt mounted in the housing to hold the two housings in the connected state.

Further particularly, a sealing material is to be introduced into the recess and the outer peripheral surface of the nut is coated with the sealing material.

Further particularly, the recess of the mating housing includes:
a first surface arranged to substantially face the outer peripheral surface of the nut while forming an introduction space for the sealing material between itself and the outer peripheral surface of the nut,
a second surface arranged to project radially outwardly from the opening edge of the first surface and
a third surface arranged from the outer end of the second surface to the connection surface in a direction crossing a projecting direction of the second surface.

Further particularly, the second surface serves as a jig contact surface with which a jig for detecting air leak in an introduced part of the sealing material can be held in contact at a detection position.

Further particularly, the second surface serves as a jig contact surface with which a jig for detecting air leak in an introduced part of the sealing material can be held in contact at a detection position.

Further particularly, the third surface serves as a jig guiding surface which can substantially guide the jig to the detection position.

Further particularly, the second surface and the third surface are sealing surfaces which keep a space to the jig air-tight at the detection position.

Further particularly, if the sealing material leaks out from the recess, the leaked sealing material may be at least partly trapped into at least one trap space defined by the second and third surfaces in the recess.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a front view of a female one of two connectors according to one embodiment of the invention,
FIG. 2 is a front view of a female housing,
FIG. 3 is a front view of a seal member,
FIG. 4 is a rear view of the female housing,
FIG. 5 is a section of the female connector,
FIG. 6 is a section of the two connectors in a connected state,
FIG. 7 is a front view of a male housing, and
FIG. 8 is an enlarged section showing an essential part of the male housing.

### <Embodiment>

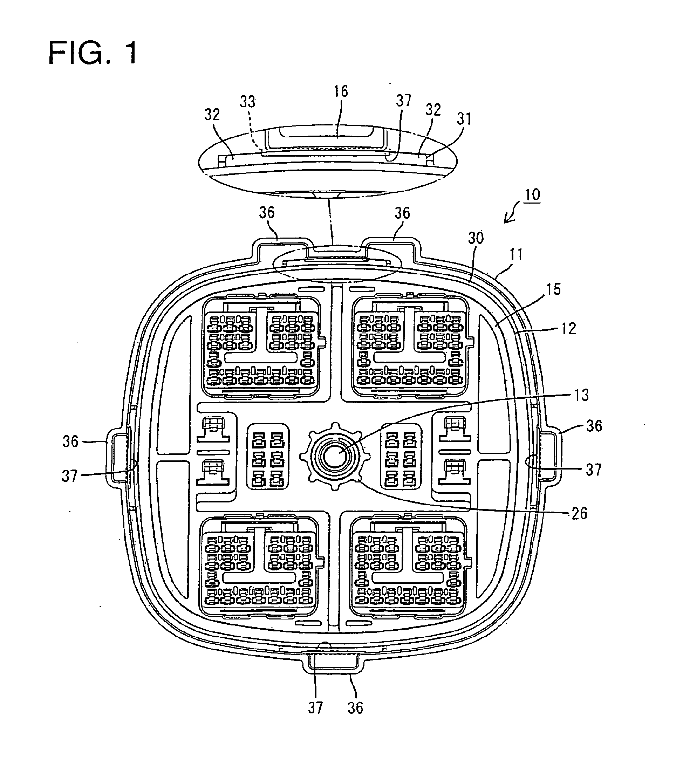

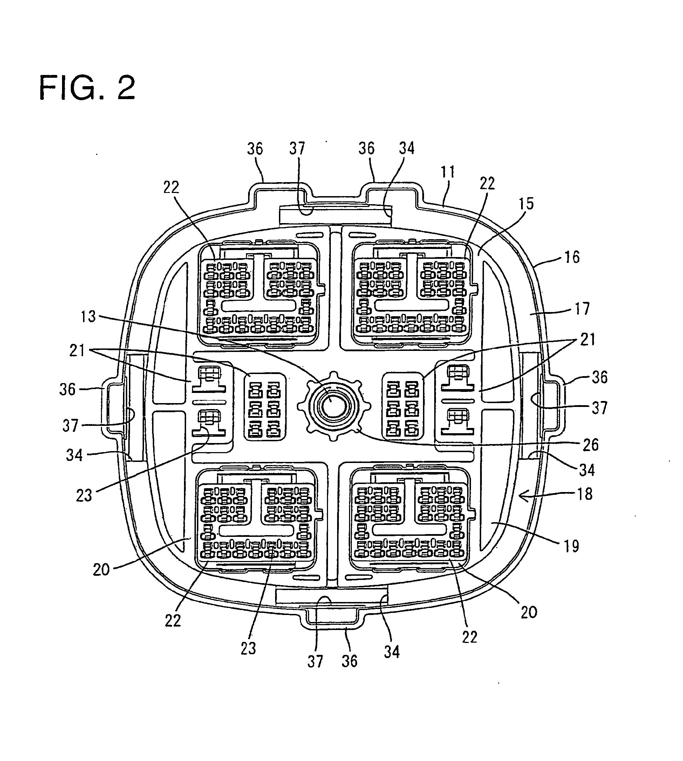

One particular embodiment of the present invention is described with reference to FIGS. 1 to 8. A connector assembly according to this embodiment includes at least one pair of female and male connectors 10, 50 connectable to each other. The female connector 10 includes a female housing 11, a seal member 12, at least one bolt 13 and/or one or more female terminal fittings 14. The male connector 50 includes a male housing 51, at least one nut 52, a moving plate 53 and one or more male terminal fittings 54. In the following description, sides of the two connectors 10, 50 to be connected are referred to as front sides concerning forward and backward directions.

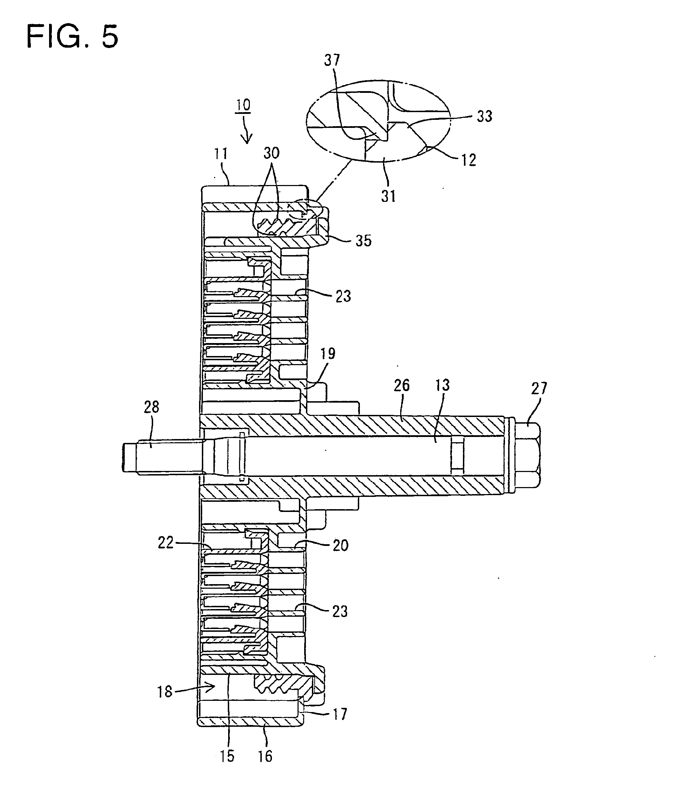

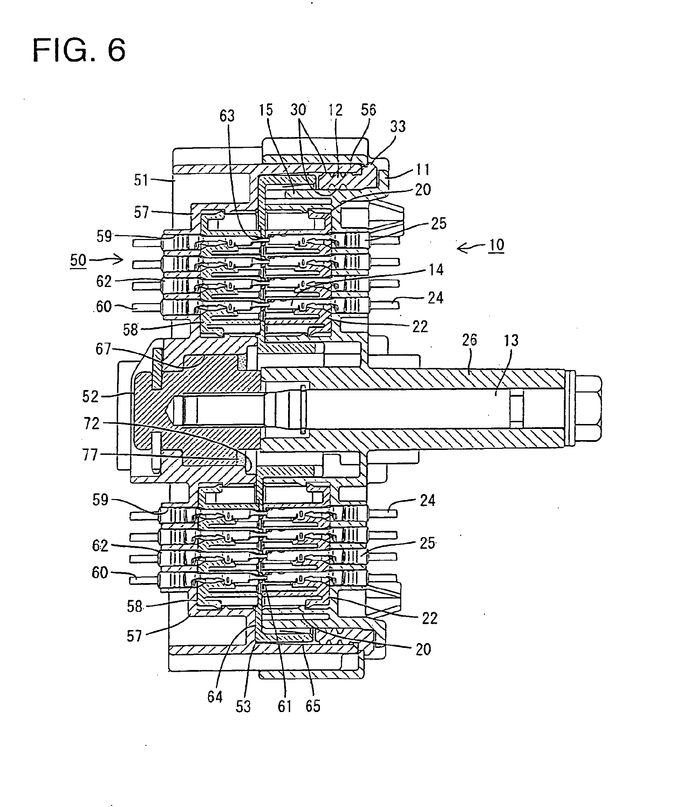

The female housing 11 is made of synthetic resin and, as shown in FIGS. 5 and 6, particularly substantially shaped to be flat and/or short in forward and backward directions as a whole. The female housing 11 includes a housing main body 15 particularly substantially rectangular in front view, an outer tubular portion 16 at least partly surrounding the housing main body 15 while being spaced apart by a specified (predetermined or predeterminable) distance, and a coupling portion 17 coupling (particularly the rear ends of) the housing main body 15 and the outer tubular portion 16. A space between the housing main body 15 and the outer tubular portion 16 particularly serves as a mount space 18 into which a receptacle 56 (to be described later) of the mating male housing 51 at least partly is fittable or insertable.

The housing main body 15 includes a back plate 19 substantially continuous from the coupling portion 17, one or more, particularly a plurality of female sub-housing accommodating portions 20 formed in the back plate 19 while being divided in a circumferential direction, and one or more, particularly a plurality of cavity tower portions 21 substantially projecting forward from the back plate 19 between the respective female sub-housing accommodating portions 20. A corresponding female sub-housing 22 at least partly is fitted or inserted and/or accommodated in each female sub-housing accommodating portion 20. One or more, particularly a plurality of female cavities 23 are formed in the respective cavity tower portions 21, the respective female sub-housings 22 and the respective female sub-housing accommodating portions 20, and the one or more female terminal fittings 14 are to be at least partly inserted and/or retained in the respective female cavities 23. The respective female terminal fittings 14 are connected or connectable to end portions of wires 24, and the connected wires 24 substantially are drawn out backward from the rear surface of the housing main body 15 (see FIG. 6). Note that a female rubber plug 25 particularly is to be mounted on or to the outer peripheral surface of each wire 24 to be held in close contact with this outer peripheral surface and the inner peripheral surface of the corresponding female cavity 23.

A bolt mounting portion 26 is formed to project forward in an intermediate part (substantially a central part) of the back plate 19. The front ends of the bolt mounting portion 26, the cavity tower portions 21 and the female sub-housing accommodating portions 20 particularly substantially are aligned at the same position, and a connection surface of the female housing 11 is formed by these front ends. The bolt mounting portion 26 particularly includes a long and narrow cylindrical part projecting backward from the back plate 19. The bolt 13 is rotatably inserted and held in the bolt mounting portion 26. A head 27 of the bolt 13 is arranged to face the rear end opening of the bolt mounting portion 26, and a shaft 28 of the bolt 13 is arranged to substantially project forward from the front end opening of the bolt mounting portion 26, i.e. from the connection surface.

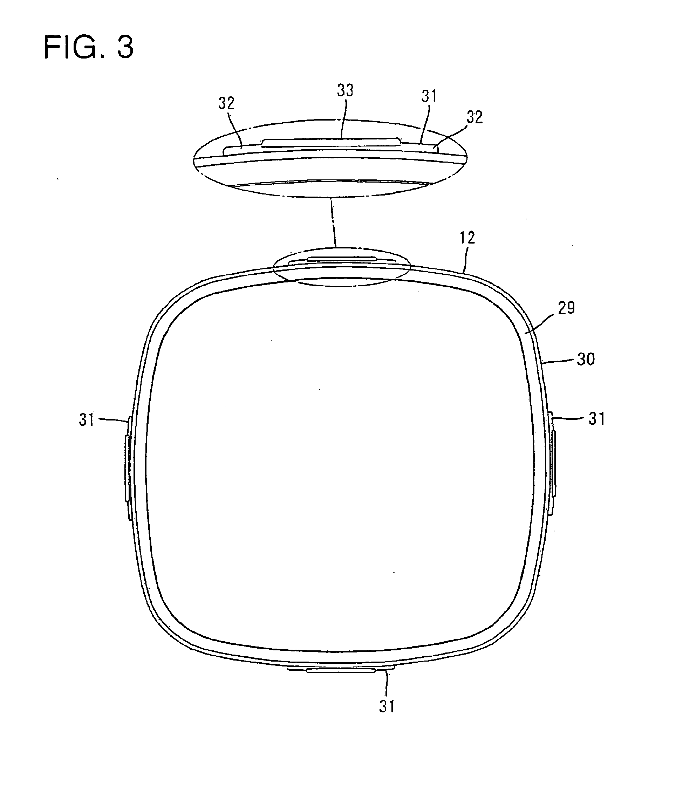

The seal member 12 is made of a resilient material such as rubber and, as shown in FIG. 3, includes an annular seal main body 29 particularly substantially with four somewhat angular corners as a whole. When the seal member 12 is mounted into the female housing 11, the seal main body 29 is mounted on the outer peripheral surface of the housing main body 15, deeply inserted into the mount space 18 to substantially come into contact with the coupling portion 17.

One or more, particularly a plurality of lips 30 are formed on the inner and/or outer surfaces of the seal main body 29 while being spaced apart in forward and backward directions. When the two housings 11, 51 are connected, the one or more respective inner lips 30 are resiliently brought into close contact with the outer peripheral surface of the housing main body 15 and/or the one or more respective outer lips 30 are resiliently brought into close contact with the inner peripheral surface of the mating receptacle 56, with the result that the space between the two housings 11, 51 is sealed in a fluid- or liquid-tight manner (see FIG. 6).

The seal main body 29 is formed with one or more, particularly a plurality of flange portions 31 substantially projecting radially outwardly after extending backward from the seal main body 29. The respective flange portions 31 substantially are long and narrow in a circumferential direction along the seal main body 29 and/or substantially arranged at equal intervals in the circumferential direction. In the case of this embodiment, the flange portions 31 are arranged at four upper, lower, left and right positions spaced apart by 90°. The projecting ends (outer ends) of the respective flange portions 31 particularly are located more outward than those of the respective outer lips 30. The (particularly substantially opposite) end portions of the front surface of the (particularly each) flange portion 31 in the circumferential direction serve as one or more, particularly a pair of pressing surfaces 32 to be pressed by an unillustrated mounting jig particularly when the seal member 12 is mounted into the female housing 11.

At least one projection 33 is formed to project radially outwardly at a position adjacent to the (particularly both) pressing surfaces 32, i.e. particularly between the both pressing surfaces 32 at the projecting end of each flange portion 31. This projection 33 is long and narrow along a central part of the projecting end of each flange portion 31 and arranged substantially in a rear portion (particularly substantially a rear half) of the (particularly each) flange portion 31.

The coupling portion 17 is formed with one or more through holes 34 (particularly substantially in the form of slits long and narrow in the circumferential direction) at one or more positions substantially corresponding to the respective flange portions 31, and/or (particularly also) one or more receiving portions 35 projecting backward from positions substantially corresponding to the one or more through holes 34. The respective receiving portions 35 particularly substantially are in the form of shallow boxes which are open radially outward, and/or rear parts of the respective flange portions 31 passed through the through holes 34 are at least partly inserted into the receiving portions 35. Thus, the rear parts of the respective flange portions 31 including the projections 33 particularly can be seen from the outside. Note that the seal member 12 particularly has a color different from the housing main body 15 to ensure good discrimination between the seal member 12 and the housing main body 15.

The outer tubular portion 16 is formed with one or more, particularly a plurality of bulging portions 36 substantially projecting radially outwardly. The respective bulging portions 36 are arranged at positions substantially facing the respective flange portions 31 of the seal main body 29 while particularly being spaced apart in the circumferential direction when the seal member 12 is mounted into the female housing 11. Specifically, one or more, particularly a pair of upper bulging portions 36 are arranged at positions substantially corresponding to the both pressing surfaces 32 of the upper flange portion 32, and the lower, left and right bulging portions 36 are arranged at positions substantially corresponding to the lower, left and right projections 33.

At (particularly the opening edges of) the through holes 34 of the coupling portion 17, one or more catching pieces 37 (particularly substantially in the form of small pieces) are formed to substantially project radially inwardly to partly close the through holes 34 at positions substantially corresponding to the respective receiving portions 35. The respective catching pieces 37 are engaged with the corresponding projections 33 when the seal member 12 is mounted into the female housing 11, thereby preventing detachment of the seal member 12 from the female housing 11. The respective catching pieces 37 particularly are formed over length ranges corresponding to the projections 33 in the circumferential direction, specifically as long as the projections 33 or slightly shorter than the projections 33. Only the respective projections 33 of the seal member 12 can be engaged with the catching pieces 37. Out of the respective catching pieces 37, the upper catching piece 37 is arranged between the upper bulging portions 36 and the lower, left and right catching pieces 37 are respectively arranged substantially in correspondence with the lower, left and right bulging portions 36.

When the seal member 12 is mounted into the female housing 11, the (particularly each) catching piece 37 is arranged at a position at least partly overlapping the (particularly both) pressing surface(s) 32 of the one or more corresponding flange portion 31 of the seal member 12 in a radial direction (projecting direction of the projection 33). More specifically, the both pressing surfaces 32 are arranged at the opposite sides of the catching piece 37 in the circumferential direction (see FIG. 1).

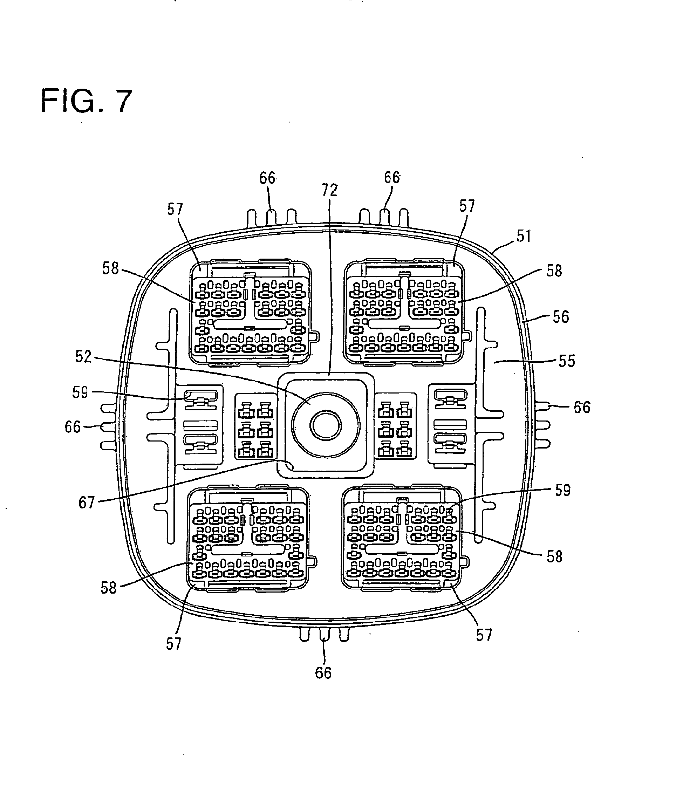

Next, the male housing 51 is described. The male housing 51 is likewise made e.g. of synthetic resin and, as shown in FIGS. 6 and 7, includes a terminal mounting portion 55 (which particularly substantially is flat and short in forward and backward directions and/or substantially rectangular in front view as a whole), and a tubular receptacle 56 substantially projecting forward from (particularly the peripheral edge of) the terminal mounting portion 55. One or more, particularly a plurality of male sub-housing accommodating portions 57 are formed in the terminal mounting portion 55 while being divided in a circumferential direction. A corresponding male sub-housing 58 is to be at least partly fitted or inserted and/or accommodated in the (particularly each) male sub-housing accommodating portion 57. The respective male sub-housings 58 and the respective male sub-housing accommodating portions 57 are formed with one or more, particularly a plurality of male cavities 59, and the one or more male terminal fittings 54 are held and/or retained in the one or more respective male cavities 59. The one or more respective male terminal fittings 54 are to be connected to end portions of one or more wires 60 and the connected wires 60 are to be drawn out backward from the rear surface of the terminal mounting portion 55. Each male terminal fitting 54 includes a male tab 61 at least partly projecting into the receptacle 56. Note that a male rubber plug 62 particularly is mounted on the outer peripheral surface of each wire 60 to be held substantially in close contact with this outer peripheral surface and the inner peripheral surface of the corresponding male cavity 59.

The moving plate 53 particularly is to be at least partly inserted in the receptacle 56. The moving plate 53 includes a plate main body 64 formed with one or more, particularly a plurality of positioning holes 63 through which the one or more respective male tabs 61 are inserted while being positioned, and a peripheral wall 65 which projects forward from (particularly the outer peripheral edge of) the plate main body 64 and can slide in contact with the inner peripheral surface of the receptacle 56. Such a moving plate 53 substantially is movable forward and backward between a standby position and a connection position in the receptacle 56. At the standby position, forward projecting amounts of the male tabs 61 from the positioning holes 63 are suppressed or reduced to be small. In the process of connecting the two housings 11, 51, the moving plate 53 particularly is pushed by the mating female housing 11 to move from the standby position towards or to the connection position. At the connection position, the male tabs 61 project more forward from the positioning holes 63 and are electrically conductively connected to the mating female terminal fittings 14. Further, the plate main body 64 particularly at least partly is sandwiched between the front surfaces (connection surfaces) of the two housings 11, 51.

One or more, particularly a plurality of ribs 66 are formed to project from the outer peripheral surface of the receptacle 56 while particularly being spaced apart in the circumferential direction. The respective ribs 66 are to be at least partly inserted into or engaged with the one or more bulging portions 36 of the mating female housing 11 when the two housings 11, 51 are properly connected while interfering with the front edge of the outer tubular portion 16 without being inserted into the bulging portions 36, thereby functioning to prevent an erroneous connection of the two housings 11, 51, when it is attempted to connect the two housings 11, 51 with one housing held in a vertically inverted posture with respect to the other.

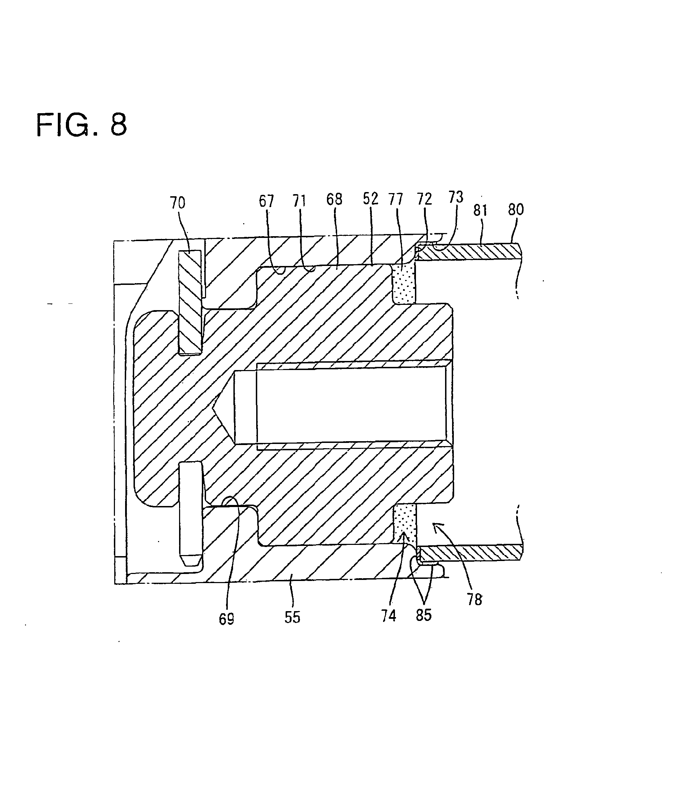

A (particularly substantially rectangular) recess 67 is formed in an intermediate part (particularly in a central part) of the front surface of the terminal mounting portion 55. The nut 52 threadably engageable with the shaft 28 of the mating bolt 13 is at least partly fitted in the recess 67. As shown in FIG. 8, a large-diameter portion 68 connected to front and rear parts via one or more steps is formed (particularly substantially over the entire circumference) on an intermediate part of the outer peripheral surface of the nut 52 in forward and backward directions. An insertion hole 69 penetrating from the bottom surface of the recess 67 to the rear surface of the terminal mounting portion 55 is formed in an intermediate part (particularly a central part) of the bottom surface of the recess 67. An outer diameter of the large-diameter portion 68 of the nut 52 particularly is substantially equal to an inner diameter of the bottom side of the recess 67, so that the large-diameter portion 68 is or can be closely fitted into an inner bottom part of the recess 67. Further, a rear end portion of the nut 52 particularly projects from the insertion hole 69 and fixed by a stopper 70 at the rear side of the terminal mounting portion 55.

At an opening side, the recess 67 is widened while particularly being stepped. Specifically, the inner peripheral surface of the recess 67 is composed of a first surface 71 which substantially extends in forward and backward directions and/or is in close contact with the large-diameter portion 68 and arranged at a substantially constant distance from a front end portion of the nut 52, a second surface 72 which is connected at an angle different from 0° or 180°, preferably substantially at a right angle to the front end of the first surface 71 and substantially extends in a radially outward direction away from the nut 52, and a third surface 73 which is connected at an angle different from 0° or 180°, preferably substantially at a right angle to the outer end of the second surface 72 and substantially extends from the outer end (extending end) of the second surface 72 to the front surface (connection surface) of the terminal mounting portion 55 in forward and backward directions at an angle different from 0° or 180°, preferably substantially orthogonal to the extending direction of the second surface 72. The second surface 72 particularly is arranged near the front surface of the terminal mounting portion 55 (opening edge of the recess 67).

A sealing material made of a potting material such as silicon resin particularly is introduced into the recess 67 from the opening in the front surface. In this case, a space between the outer peripheral surface of the front end portion of the nut 52 and the first surface 71 of the recess 67 serves as an introduction space 74 for the sealing material. The sealing material introduced into the introduction space 74 at least partly is coated or spread on the outer peripheral surface of the front end portion of the nut 52 and the first surface 71 of the recess 67, whereby the nut 52 is sealed around in an air- or fluid-tight manner. The sealing material introduced into the introduction space 74 is cured such as by being cooled, thereby forming a resin portion 77 in the recess 67.

Next, functions of the connectors 10, 50 according to this embodiment are described.

Specifically, the sealing material at least partly is introduced into the introduction space 74 of the recess 67. At this time, the sealing material particularly is or can be introduced using the position of the second surface 72 as an index so that the surface position thereof is substantially aligned with the second surface 72 in forward and backward directions. If the sealing material leaks out from the introduction space 74 of the recess 67, the leaked sealing material is or may be at least partly trapped into at least one trap space 78 defined by the second and third surfaces 72, 73 in the recess 67, whereby it is avoided that the leaked sealing material reaches the front surface of the terminal mounting portion 55.

After the sealing material is cured, an air leak test is carried out as to whether or not a sealed state in the recess 67 is proper. A jig 80 including a (particularly substantially cylindrical) detector 81 is used for air leak test, and a leading end portion of the detector 81 is or can be at least partly inserted into the recess 67. In an insertion process of the jig 80, the outer peripheral surface of the leading end portion of the detector 81 substantially slides in contact with the third surface 73 of the recess 67 while being positioned. At a detection position where an inserting operation of the detector 80 is ended, an opening end surface of the detector 81 substantially comes into contact with the second surface 72, thereby preventing any further insertion of the jig 80. In other words, the second surface 72 of the recess 67 particularly serves as a jig contact surface with which the jig 80 can be held in contact at the detection position, and/or the third surface 73 of the recess 67 particularly serves as a jig guiding surface which can substantially guide the jig 80 to the detection position. The jig 80 blows out air to the surface of the resin portion 77 from the detector 81 at the detection position and/or checks the sealed state based on the presence or absence of air leakage.

Seal materials 85 are attached to the outer peripheral surface of the leading end portion of the detector 81 and the opening end surface of the detector 81. The seal materials 85 are or may be held in close contact with the second surface 72 and the third surface 73 at the detection position, thereby preventing air leakage between the second surface 72 and the third surface 73. In other words, the second surface 72 and the third surface 73 of the recess 67 particularly (also) function as sealing surfaces for holding a space to the jig 80 air-tight at the detection position.

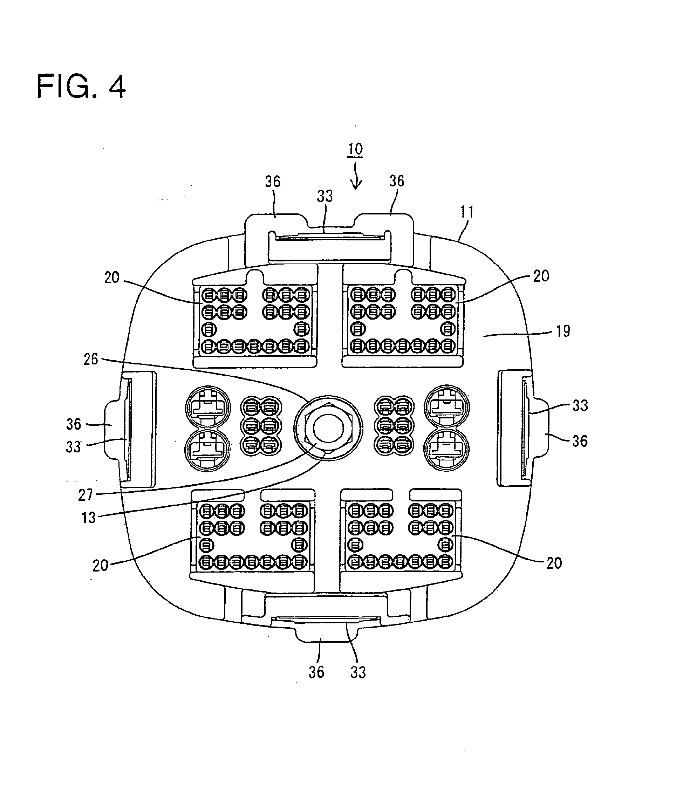

On the other hand, the seal member 12 is mounted or mountable on or to the housing main body 15 of the female housing 11. Upon mounting the seal member 12 on or to the housing main body 15, a leading end portion of an unillustrated mounting jig particularly is pressed against the (particularly both) pressing surface(s) 32 of the (particularly each) flange portion 31 of the seal member 12. The leading end portion of the mounting jig particularly substantially is channel-shaped and includes one or more, particularly a pair of leg pieces substantially facing the (both) pressing surfaces 32. In this case, the leading ends of the both leg pieces press the (both) pressing surfaces 32 while straddling or spanning over the projection 33, whereby the seal member 12 is pushed toward the back side of the mount space 18. In the process of mounting the seal member 12, the one or more projections 33 interfere with the one or more respective catching pieces 37 and resiliently deform the one or more respective catching pieces 37 inwardly. As the seal member 12 reaches a proper mount position, the projections 33 substantially move past the catching pieces 37 and are resiliently at least partly restored, with the result that the projections 33 face the catching pieces 37 from behind (see FIGS. 1 and 4). The seal member 12 having reached the mount position in this way is prevented from coming out forward by the contact of the projection(s) 33 with the catching piece(s) 37 and/or prevented from coming out backward by the contact of the seal member 12 with the coupling portion 17.

Subsequently, upon starting a connecting operation of the two housings 11, 51, the two housings 11, 51 substantially are arranged right opposite to each other and, in this state, the leading end of the shaft 28 of the bolt 13 is loosely screwed into the nut 52. The shaft 28 of the bolt 13 is substantially completely screwed into the nut 52 and the two housings 11, 51 are connected to each other by this screwing operation. At this time, since the head 27 of the bolt 13 is located behind and/or distant from the rear surface of the housing main body 15 by the bolt mounting portion 26, it is avoided that the wires 24 drawn out from the rear surface of the housing main body 15 are tangled in a jig for tightening the bolt 13.

As described above, the following effects can be displayed according to this embodiment.
(1) By particularly specifying the surface position of the sealing material introduced into the recess 67 based on the second surface 72, even if the sealing material leaks out from the first surface 71 to the second surface 72 of the recess 67, the sealing material particularly is trapped by the third surface 73 of the recess 67 and/or it particularly is avoided that the sealing material reaches the connection surface of the housing main body 15. Thus, it is not necessary to strictly manage the introduced amount of the sealing material and operability at the time of introducing the sealing material is improved.
(2) Since the second surface 72 of the recess 67 particularly serves as the jig contact surface with which the jig 80 for air leak test can be held substantially in contact at the detection position, the construction can be simplified as compared with the case where a special jig contact surface is formed separately from the second surface 72.
(3) Since the third surface 73 of the recess 67 particularly serves as the jig guiding surface which can substantially guide the jig 80 to the detection position, the construction can be simplified as compared with the case where a special jig guiding surface is formed separately from the third surface 73.
(4) Since the second surface 72 and the third surface 73 of the recess 67 particularly serve as the sealing surfaces which can keep the space to the jig 80 fluid- or air-tight at the detection position, the construction can be simplified as compared with the case where special sealing surfaces are formed separately from the second surface 72 and the third surface 73.
(5) Since the pressing surface(s) 32 of the seal member 12 particularly are arranged at one or more positions at least partly overlapping the one or more respective catching pieces 37 in the projecting directions of the catching pieces 37 when the seal member 12 is mounted into the female housing 11, the pressing surfaces 32 can be formed in sufficient spaces in the projecting directions of the catching pieces 37. As a result, sufficient pressing areas of the pressing surfaces 32 of the seal member 12 can be ensured without enlarging the female housing 11.
(6) Since a pair of pressing surfaces 32 of the seal member 12 particularly are arranged at the substantially opposite sides of the catching piece 37 when the seal member 12 is mounted into the female housing 11, the mounting jig for pressing the both pressing surfaces 32 can have, for example, a channel shape, whereby strength of the jig can be increased.
(7) Since the seal member 12 particularly is formed with the one or more projections 33 projecting in the substantially same directions as the projecting directions of the one or more respective catching pieces 37 from parts adjacent to the pressing surfaces 32 and the projection(s) 33 is/are engaged or engageable with the catching piece(s) 37, an area of engagement of the seal member 12 with the catching pieces 37 can be appropriately adjusted according to the projecting amounts of the projections 33.

Accordingly, to ensure a sufficient pressing area of a pressing surface of a seal member, one or more catching pieces 37 are formed to project from a female housing 11, and an end surface of a seal member 12 particularly serves as one or more pressing surfaces 32. The pressing surface(s) 32 is/are pressed to push the seal member 12 to a mount position in the process of mounting the seal member 12 into the female housing 11, and the seal member 12 resiliently moves substantially past the catching pieces 37 and is engaged with the catching piece(s) 37 at the mount position. The pressing surface(s) 32 of the seal member 12 is/are arranged at positions at least partly overlapping the one or more respective catching pieces 37 in projecting directions of the catching piece(s) 37 when the seal member 12 is mounted into the female housing 11.

### <Other Embodiments>

The present invention is not limited to the above described and illustrated embodiment. For example, the following embodiments are also included in the technical scope of the present claims.
(1) The catching pieces may be arranged in pairs and each pressing surface of the seal member may be positioned between the corresponding pair of catching pieces.
(2) The second surface of the recess may not necessarily be orthogonal to the first and third surfaces.
(3) Conversely to the above, a nut may be mounted in the female connector and a bolt may be mounted in the male connector.

>

### LIST OF REFERENCE NUMERALS

- 10: female connector
- 11: female housing
- 12: seal member
- 13: bolt
- 31: flange portion
- 32: pressing surface
- 33: projection
- 37: catching piece
- 50: male connector
- 51: male housing
- 52: nut
- 67: recess
- 71: first surface
- 72: second surface
- 73: third surface
- 74: introduction space
- 77: resin portion
- 80: jig (for air leak test)

## Claims

1. A connector, (10) comprising:
a housing (11) connectable to a mating housing (51); and
a seal member (12) mounted in the housing (11) and configured to be held in close contact with the two housings (11, 51) in a connected state by being sandwiched between the two housings (11, 51);
wherein:
the housing (11) is formed with at least one catching piece (37);
an end surface of the seal member (12) serves as a pressing surface (32);
the pressing surface (32) is pressed to push the seal member (12) to a mount position in the process of mounting the seal member (12) into the housing (11) and the seal member (12) resiliently moves past the catching piece (37) and is engaged with the catching piece (37) at the mount position; and
the seal member (12) includes an annular seal main body (29) and a flange portion (31) projecting radially outwardly from the seal main body (29) and extending in a circumferential direction along the seal main body (29);
wherein
a pair of pressing surfaces (32) of the seal member (12) are formed at opposite end portions of the flange portion (31) in the circumferential direction;
**characterized in that**
the pressing surfaces (32) of the seal member (12) are arranged at a positions at least partly overlapping the catching piece (37) in a projecting direction of the catching piece (37) when the seal member (12) is mounted into the housing (11).

2. A connector according to claim 1, wherein the pair of pressing surfaces (32) of the seal member (12) are arranged at the substantially opposite sides of the catching piece (37) when the seal member (12) is mounted into the housing (11).

3. A connector according to any one of the preceding claims, wherein;
the seal member (12) is formed with at least one projection (33) projecting in the substantially same direction as the projecting direction of the catching piece (37) from a part of the seal member (12) adjacent to the pressing surface (32); and
the projection (33) is engaged with the catching piece (37).

4. A connector according to any one of the preceding claims, wherein the housing (11) includes a housing main body (15), an outer tubular portion (16) at least partly surrounding the housing main body (15) while being spaced apart by a specified distance, and a coupling portion (17) coupling the housing main body (15) and the outer tubular portion (16).

5. A connector according to claim 4, wherein the coupling portion (17) is formed with at least one through hole (34) at a position substantially corresponding to a flange portion (31) of the seal member (12), and a receiving portion (35) projecting backward from a position substantially corresponding to the through hole (34), wherein the flange portion (31) can be passed through the through hole (34) to be at least partly inserted into the receiving portion (35), so that at least part of the flange portion (31) can be seen from the outside.

6. A connector according to any one of the preceding claims, wherein the seal member (12) has a color different from the housing (11).

7. A connector assembly comprising a connector (10) according to any one of the preceding claims and a mating connector (50) to be connected thereto.

8. A connector assembly according to claim 7, wherein the mating connector (50) comprises a mating housing (51) to be connected to the housing (11) and having at least one recess (67) formed in a connection surface at least partly substantially facing the housing (11) in a connected state.

9. A connector assembly according to claim 8, wherein a nut (52) at least partly inserted into the recess (67), fixed to the mating housing (51) in a state exposed on the connection surface, and threadably engaged with a bolt (13) mounted in the housing (11) to hold the two housings (11, 51) in the connected state.

10. A connector assembly according to claim 8 or 9, wherein a sealing material is to be introduced into the recess (67) and the outer peripheral surface of the nut (52) is coated with the sealing material.

11. A connector assembly according to claim 8, 9 or 10, wherein the recess (67) of the mating housing (51) includes:
a first surface (71) arranged to substantially face the outer peripheral surface of the nut (52) while forming an introduction space for the sealing material between itself and the outer peripheral surface of the nut (52),
a second surface (72) arranged to project radially outwardly from the opening edge of the first surface (71) and
a third surface (73) arranged from the outer end of the second surface (72) to the connection surface in a direction crossing a projecting direction of the second surface (72).

12. A connector assembly according to claim 11, wherein the second surface (72) serves as a jig contact surface with which a jig (80) for detecting air leak in an introduced part of the sealing material can be held in contact at a detection position.

13. A connector assembly according to claim 12, wherein the third surface (73) serves as a jig guiding surface which can substantially guide the jig (80) to the detection position.

14. A connector assembly according to claim 11, 12 or 13, wherein the second surface (72) and the third surface (73) are sealing surfaces which keep a space to the jig air-tight at the detection position.

15. A connector assembly according to any one of the preceding claims 10 to 14, wherein if the sealing material leaks out from the recess (67), the leaked sealing material may be at least partly trapped into at least one trap space (78) defined by the second and third surfaces (72, 73) in the recess (67).

## Patentansprüche

1. Ein Verbinder (10), der Folgendes umfasst:
ein Gehäuse (11) das mit einem kompatiblen Gehäuse (51) verbindbar ist; und
ein Abdichtungselement (12), das im Gehäuse (11) montiert ist und dazu konfiguriert ist, im angeschlossenen Zustand in engem Kontakt mit den zwei Gehäusen (11,51) gehalten zu werden, indem es zwischen den beiden Gehäusen (11, 51) eingeklemmt wird;
wobei:
das Gehäuse (11) mit mindestens einem Fangteil (37) gebildet wird;
eine Endfläche des Abdichtungselements (12) als Pressfläche (32) dient;
die Pressfläche (32) gepresst wird, um das Abdichtungselement (12) im Prozess der Montage des Abdichtungselements (12) in das Gehäuse (11) zu einer Montageposition zu schieben, und das Abdichtungselement (12) sich elastisch über das Fangteil (37) hinweg bewegt und mit dem Fangteil (37) an der Montageposition in Eingriff kommt; und
das Abdichtungselement (12) einen ringförmigen Dichtungs-Hauptkörper (29) und einen Flanschabschnitt (31) beinhaltet, der radial nach außen vom Dichtungs-Hauptkörper (29) vorsteht und in Umfangsrichtung am Dichtungs-Hauptkörper (29) entlang verläuft;
wobei ein Paar Pressflächen (32) des Abdichtungselements (12) an entgegengesetzten Endabschnitten des Flanschabschnitts (31) in Umfangsrichtung gebildet werden;
**dadurch gekennzeichnet, dass**
die Pressflächen (32) des Abdichtungselements (12) in Positionen angeordnet werden, die in Vorsprungrichtung des Fangteils (37) zumindest teilweise mit dem Fangteil (37) überlappen, wenn das Abdichtungselement (12) im Gehäuse (11) montiert ist.

2. Ein Verbinder nach Anspruch 1, wobei ein Paar Pressflächen (32) des Abdichtungselements (12) an im Wesentlichen entgegengesetzten Seiten des Fangteils (37) angeordnet werden, wenn das Abdichtungselement (12) im Gehäuse (11) montiert ist.

3. Ein Verbinder nach irgendeinem der vorhergehenden Ansprüche, wobei:
das Abdichtungselement (12) mit mindestens einem Vorsprung (33) gebildet wird, der im Wesentlichen in die gleiche Richtung vorsteht als die Vorsprungrichtung des Fangteils (37) von einem Teil des Abdichtungselements (12), das an der Pressfläche (32) anliegt; und
der Vorsprung (33) mit dem Fangteil (37) im Eingriff steht.

4. Ein Verbinder nach irgendeinem der vorhergehenden Ansprüche, wobei das Gehäuse (11) ein Gehäuse-Hauptkörper (15) beinhaltet, einen äußeren rohrförmigen Abschnitt (16), der zumindest teilweise den Gehäuse-Hauptkörper (15) umgibt, wobei er um ein vorgegebenes Maß beabstandet ist, und einen Kopplungsabschnitt (17), der den Gehäuse-Hauptkörper (15) und den äußeren rohrförmigen Abschnitt (16) miteinander koppelt.

5. Ein Verbinder nach Anspruch 4, wobei der Kopplungsabschnitt (17) mit mindestens einem Durchgangsloch (34) an einer Position gebildet wird, die im Wesentlichen einem Flanschabschnitt (31) des Abdichtungselements (12) entspricht, und einem Empfangsabschnitt (35), der nach hinten von einer Position vorsteht, die im Wesentlichen dem Durchgangsloch (34) entspricht, wobei der Flanschabschnitt (31) durch das Durchgangsloch (34) durchgegeben werden kann, um zumindest teilweise in den Empfangsabschnitt (35) eingesetzt zu werden, sodass zumindest ein Teil des Flanschabschnitts (31) von außen gesehen werden kann.

6. Ein Verbinder nach irgendeinem der vorhergehenden Ansprüche, wobei das Abdichtungselement (12) eine Farbe aufweist, die sich von der des Gehäuses (11) unterscheidet.

7. Eine Verbindereinheit, die einen Verbinder (10) nach irgendeinem der vorhergehenden Ansprüche umfasst, und einen kompatiblen Verbinder (50), der damit zu verbinden ist.

8. Eine Verbindereinheit nach Anspruch 7, wobei der kompatible Verbinder (50) ein kompatibles Gehäuse (51) umfasst, das mit dem Gehäuse (11) zu verbinden ist und mindestens eine Vertiefung (67) aufweist, die in einer Verbindungsfläche gebildet wird, die in einem verbundenen Zustand zumindest teilweise dem Gehäuse (11) im Wesentlichen zugewandt ist.

9. Eine Verbindereinheit nach Anspruch 8, wobei eine Mutter (52) zumindest teilweise in die Vertiefung (67) eingesetzt wird, an das kompatible Gehäuse (51) in einem auf der Verbindungsfläche exponierten Zustand befestigt wird, und mit einem im Gehäuse (11) montierten Bolzen (13) im Gewindeeingriff stehend, um die beiden Gehäuse (11, 51) im verbundenen Zustand zu halten.

10. Eine Verbindereinheit nach Anspruch 8 oder 9, wobei ein Dichtungsmaterial in die Vertiefung (67) einzusetzen ist und die äußere Umfangsfläche der Mutter (52) mit dem Dichtungsmaterial beschichtet ist.

11. Eine Verbindereinheit nach Anspruch 8, 9 oder 10, wobei die Vertiefung (67) des kompatiblen Gehäuses (51) Folgendens beinhaltet:
eine erste Fläche (71), die angeordnet ist, um der äußeren Umfangsfläche der Mutter (52) im Wesentlichen zugewandt zu sein, und gleichzeitig zwischen sich und der äußeren Umfangsfläche der Mutter (52) einen Einführungsraum für das Dichtungsmaterial zu bilden,
eine zweite Fläche (72), die angeordnet ist, um radial vom Öffnungsrand der ersten Fläche (71) nach außen vorzustehen und
eine dritte Fläche (73), die vom äußeren Ende der zweiten Fläche (72) zur Verbindungsfläche in einer Richtung angeordnet ist, die eine Vorsprungrichtung der zweiten Fläche (72) kreuzt.

12. Eine Verbindereinheit nach Anspruch 11, wobei die zweite Fläche (72) als Vorrichtungs-Kontaktfläche dient, mit der eine Vorrichtung (80), zur Erkennung eines Luftaustritts in einem eingeführten Teil des Dichtungsmaterials, an einer Erkennungsposition in Kontakt gehalten werden kann.

13. Eine Verbindereinheit nach Anspruch 12, wobei die dritte Fläche (73) als Vorrichtungsführungsfläche dient, die die Vorrichtung (80) zur Erkennungsposition im Wesentlichen führen kann.

14. Eine Verbindereinheit nach Anspruch 11, 12 oder 13, wobei die zweite Fläche (72) und die dritte Fläche (73) Dichtungsflächen sind, die luftdicht einen Abstand zur Vorrichtung in Erkennungsposition halten.

15. Eine Verbindereinheit nach irgendeinem der vorhergehenden Ansprüche von 10 bis 14, wobei falls das Dichtungsmaterial aus der Vertiefung (67) entweicht, das entwichene Dichtungsmaterial zumindest teilweise in mindestens einem Fallen-Raum (78) gefangen werden kann, der durch die zweite und dritte Fläche (72, 73) in der Vertiefung (67) definiert wird.

## Revendications

1. Un connecteur (10), comprenant :
un boîtier (11) pouvant être connecté à un boîtier homologue (51) ; et
un élément d'étanchéité (12) monté dans le boîtier (11) et configuré pour être maintenu en contact étroit avec les deux boîtiers (11, 51) dans un état connecté en étant enserré entre les deux boîtiers (11, 51) ;
sachant que :
le boîtier (11) est constitué de manière à présenter au moins une pièce d'accrochage (37) ;
une surface terminale de l'élément d'étanchéité (12) sert de surface de pressage (32) ;
la surface de pressage (32) est pressée pour pousser l'élément d'étanchéité (12) dans une position de montage dans le processus de montage de l'élément d'étanchéité (12) dans le boîtier (11) et que l'élément d'étanchéité (12) se déplace de manière élastique au-delà de la pièce d'accrochage (37) et s'engage avec la pièce d'accrochage (37) à la position de montage ; et que
l'élément d'étanchéité (12) inclut un corps principal annulaire d'étanchéité (29) et une portion de bride (31) saillant de façon radiale vers l'extérieur du corps principal d'étanchéité (29) et s'étendant dans une direction de circonférence le long du corps principal d'étanchéité (29) ;
sachant que une paire de surfaces de pressage (32) de l'élément d'étanchéité (12) est formée auprès de portions d'extrémités latérales opposées de la portion de bride (31) en direction de circonférence ;
**caractérisé en ce que**
les surfaces de pressage (32) de l'élément d'étanchéité (12) sont disposées dans des positions qui chevauchent au moins partiellement avec la pièce d'accrochage (37) dans une direction de saillie de la pièce d'accrochage (37), quand l'élément d'étanchéité (12) est monté dans le boîtier (11).

2. Un connecteur d'après la revendication 1, sachant que la paire de surfaces de pressage (32) de l'élément d'étanchéité (12) est disposée à des côtés essentiellement opposés de la pièce d'accrochage (37) quand l'élément d'étanchéité (12) est monté dans le boîtier (11).

3. Un connecteur d'après une des revendications précédentes, sachant que :
l'élément d'étanchéité (12) est constitué avec au moins une saillie (33) saillant essentiellement dans la même direction que la direction de saillie de la pièce d'accrochage (37) à partir d'une partie de l'élément d'étanchéité (12) adjacent à la surface de pressage (32) ; et que
la saillie (33) est engagée avec la pièce d'accrochage (37).

4. Un connecteur d'après une des revendications précédentes, sachant que le boîtier (11) inclut un corps principal de boîtier (15), une portion tubulaire extérieure (16) entourant au moins partiellement le corps principal de boîtier (15), tout en étant espacé d'un écart spécifié, et une portion d'accouplement (17) accouplant le corps principal de boîtier (15) et la portion tubulaire extérieure (16).

5. Un connecteur d'après la revendication 4, sachant que la portion d'accouplement (17) est constituée avec au moins un trou traversant (34) dans une position correspondant essentiellement à une portion de bride (31) de l'élément d'étanchéité (12), et une portion de réception (35) saillant vers l'arrière à partir d'une position correspondant essentiellement au trou traversant (34), sachant que la portion de bride (31) peut être passée à travers le trou traversant (34) pour qu'elle soit au moins partiellement insérée dans la portion de réception (35), de manière qu'au moins une partie de la portion de bride (31) puisse être perçue de l'extérieur.

6. Un connecteur d'après une des revendications précédentes, sachant que l'élément d'étanchéité (12) présente une couleur différente de celle du boîtier (11).

7. Un ensemble de connecteur comprenant un connecteur (10) d'après une des revendications précédentes et un connecteur homologue (50) à connecter avec celui-ci.

8. Un ensemble de connecteur d'après la revendication 7, sachant que le connecteur homologue (50) comprend un boîtier homologue (51) à connecter avec le boîtier (11) et présentant au moins un renfoncement (67) constitué dans une surface de connexion faisant face au moins en partie essentiellement au boîtier (11) dans un état connecté.

9. Un ensemble de connecteur d'après la revendication 8, sachant qu'un écrou (52) est au moins partiellement inséré dans le renfoncement (67), fixé au boîtier homologue (51) dans un état exposé à la surface de connexion, et en prise de manière filetée avec un boulon (13) monté dans le boîtier (11) pour maintenir les deux boîtiers (11, 51) dans l'état connecté.

10. Un ensemble de connecteur d'après la revendication 8 ou 9, sachant qu'un matériau d'étanchéité est à introduire dans le renfoncement (67) et que la surface périphérique extérieure de l'écrou (52) est revêtu du matériau d'étanchéité.

11. Un ensemble de connecteur d'après la revendication 8, 9 ou 10, sachant que le renfoncement (67) du boîtier homologue (51) inclut :
une première surface (71) disposée de manière à faire face essentiellement à la surface périphérique extérieure de l'écrou (52) tout en constituant une espace d'introduction pour le matériau d'étanchéité entre soi-même et la surface périphérique extérieure de l'écrou (52),
une deuxième surface (72) disposée de manière à saillir radialement vers l'extérieur à partir du bord d'ouverture de la première surface (71) et
une troisième surface (73) disposée à partir de l'extrémité extérieure de la deuxième surface (72) à la surface de connexion dans une direction entrecoupant une direction de saillie de la deuxième surface (72).

12. Un ensemble de connecteur d'après la revendication 11, sachant que la deuxième surface (72) sert de surface de contact de gabarit par laquelle un gabarit (80), pour la détection de fuites d'air dans une partie introduite de matériau d'étanchéité, peut être gardé en contact dans une position de détection.

13. Un ensemble de connecteur d'après la revendication 12, sachant que la troisième surface (73) sert de surface de guidage de gabarit, laquelle peut essentiellement guider le gabarit (80) à la position de détection.

14. Un ensemble de connecteur d'après la revendication 11, 12 ou 13, sachant que la deuxième surface (72) et la troisième surface (73) sont des surfaces d'étanchéité qui maintiennent un espace vers le gabarit étanche à l'air dans la position de détection.

15. Un ensemble de connecteur d'après une des revendications précédentes de 10 à 14, sachant que si le matériau d'étanchéité s'échappe du renfoncement (67), le matériau d'étanchéité échappé peut être au moins partiellement piégé dans au moins un espace de saisie (78) défini par la deuxième et la troisième surface (72, 73) dans le renfoncement (67).
